# EUROPEAN PATENT SPECIFICATION

(11) **EP 1 462 766 B1**
(45) Date of publication and mention of the grant of the patent: **07.08.2019**
(21) Application number: 03027273.6
(22) Date of filing: 28.11.2003
(51) Int. Cl.: G01C 21/36

(54) **Map display device and program therefor**
Kartenanzeigevorrichtung und -programm
Dispositif d'affichage de cartes et son logiciel

(30) Priority: 29.11.2002 JP 2002349216
(43) Date of publication of application: 29.09.2004
(60) Divisional application: 10155636.3
(73) Proprietor: AISIN AW CO., LTD., Anjo, Aichi 444-1192 (JP)
(72) Inventor: Chiba, Wataru, Okazaki, Aichi 444-8564 (JP)
(74) Representative: Vossius & Partner Patentanwälte Rechtsanwälte mbB

(56) References cited:
- EP-A1- 1 150 268
- EP-A2- 1 253 400
- DE-A1- 10 038 401
- JP-A- H1 096 647
- JP-A- 2000 010 472
- JP-A- 2002 048 581
- JP-A- 2002 140 143
- US-A- 5 237 323
- US-A1- 6 038 508
- US-A1- 6 108 631
- US-B1- 6 484 094

## Description

The present invention relates to a map display device and a program therefor.

There have been provided conventional map display devices for a vehicle, wherein a destination is set on an address basis. Document EP 1 150 268 A1 describes a method and apparatus for selecting a destination in a vehicle navigation apparatus, wherein the apparatus stores previously selected destinations and displays them in the form of different lists.

Some conventional map display devices retrieve a destination by inputting an address of the destination on an administrative district-to-district basis in decreasing order of district size, for example: Administrative divisions of Japan (the Tokyo metropolitan area, Hokkaido, and other prefectures) → Municipalities (Cities, Wards, Towns and Villages) → A large hamlet, or Ooaza (a large collection of dwellings) → A small hamlet, or Koaza (a small collection of dwellings) → House number. Every inputted address of the retrieved point is stored as historic records of the inputted addresses of the past-retrieved points. The historic records of the inputted addresses of the past-retrieved points are presented to a user in the form of a list. This list simplifies a process of point retrieval in a case where the user tries to retrieve the same point that was retrieved in the past. It is publicly known (from Document #1:
JP-A- 9-229708) that other conventional map display devices allow the user to retrieve a point located slightly apart from the past -retrieved point whose address is listed in the historic records of the inputted addresses of the past-retrieved points. In this case, a point closest to his/her desired point is selected from the list, and therewith a map that covers such desired point is displayed in a scrollable way.

However, there is a problem with said conventional map display device.

For retrieving a new point, the conventional map display device requires the user to input an address of the new point, for instance in Japan on an administrative district-to-district basis; from
"Administrative divisions of Japan" down to "House number." This is time-consuming work and bothersome to the user. This problem deepens in the case of retrieval of a new point whose address is similar to the address of the past-retrieved point. In this case, regardless of the similarity between the address of the new point and the address of the past-retrieved point, said conventional map display device requires the user to input the address of the new point from the ground up by selecting each administrative district in decreasing order of district size. This bothers the user as well as takes user's time.

Said problem is orvecome with the features of the claims. In particular, the present invention provides a map display device and a program for a map display device according to claim 1 and 5.

The input page may display the addresses in Japanese syllables and/or English letters and/or any other language letters.

It should be understood that the detailed description and the specific example of the Japanese address notation are given by way of illustration only, since various changes and modifications, like the language, the displayed language letters and the specific address notation may be adapted to any specific country or region.
F1G.1 is a schematic illustration of a map display device as an example of the preferred embodiments.
FIG.2 illustrates an input page used in the present embodiment.
FIG.3 is a flowchart showing a process of point retrieval based on addresses according to the present embodiment.
FIG.4 illustrates a process for inputting an address of a point to be retrieved according to the preferred embodiment.
FIG.5 shows historic records of the inputted addresses of points that were retrieved seven times in the past.
FIG.6 illustrates data structure of the historic records of the inputted addresses of the past-retrieved points shown in FIG. 5.
FIG.7 illustrates a process for inputting an address of a point to be retrieved based on data structure shown in FIG. 6.
FIG.8 explains how to ensure data-portability between different systems by deriving address information from data ported from other systems.
FIG.9 illustrates other exemplary process of point retrieval based on addresses according to the preferred embodiment.

Embodiments according to the present invention will be described hereinafter in detail with reference to the accompanying drawings.

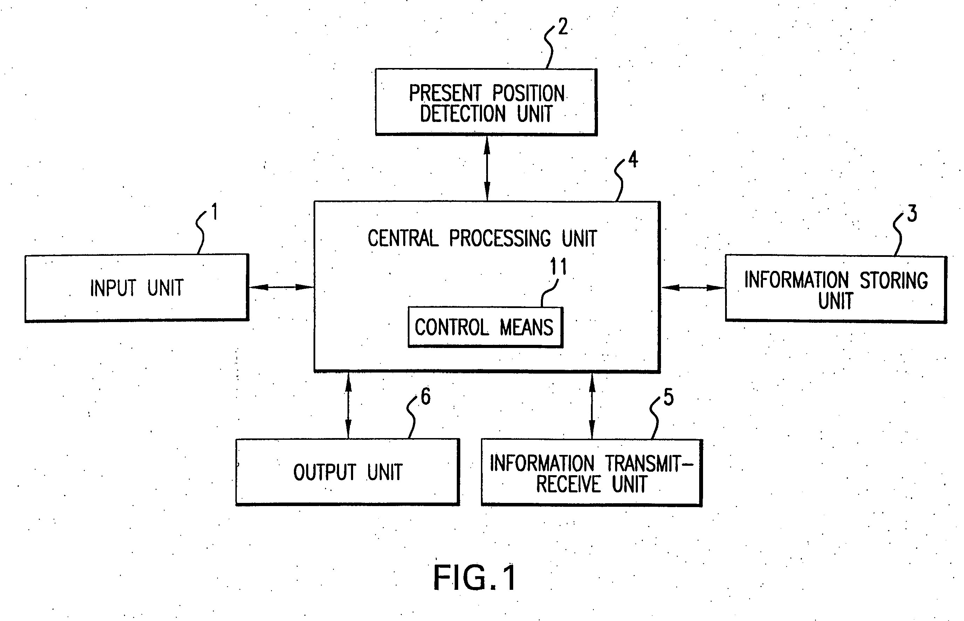

FIG.1 is a schematic illustration of a map display device as an example of the present embodiments.

In FIG.1, there shown a map display device comprising: an input unit 1 for inputting information, such as a departure point, a destination point, or the like, necessary for route guidance; a present position detection unit 2 for detecting a present position of a vehicle; an information storing unit 3 for storing cartographic data used in drawing a map necessary for route search, guide data for visual/vocal route guidance, programs (i.e., applications and/or operating systems) for map display, route search, vocal guidance, or the like; a central processing unit 4 serving as a navigation processing means for controlling every processing by the system, including map-display processing, route search processing, and visual/vocal route guidance processing, by reading out the cartographic data from the information storing unit 3 or by temporarily storing the cartographic data read out from the unit 3; an information transmit-receive unit 5 for transmitting/receiving road information, traffic information, and detected information about the present position of the vehicle; and an output unit 6 for outputting the route guidance.

According to the present embodiment, the central processing unit 4 includes a control means 11 for displaying an input page from which an address is inputted on an administrative district-to-district basis as well as for displaying an administrative district name of past-retrieved point in an administrative district item field shown in the input page.

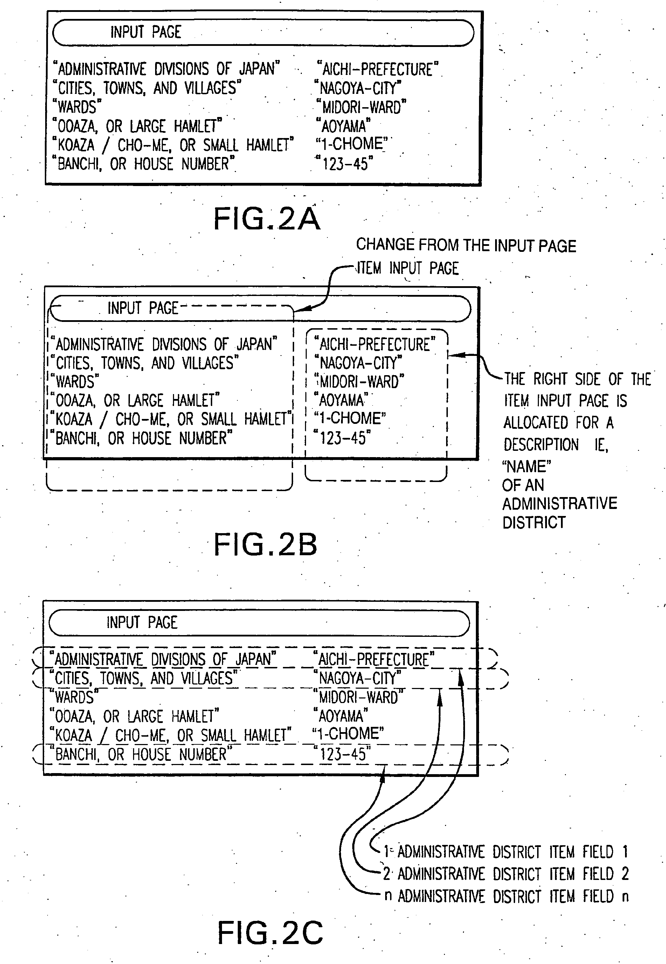

FIG.2 illustrates an input page used in the present embodiment.

Upon selection of an address input menu from a menu page on the map display device, the menu page goes to an input page as shown in FIG.2 (a). The input page shows administrative district item fields; for example, from top to bottom, "Administrative divisions of Japan" (the Tokyo metropolitan area, Hokkaido, and other prefectures), "Cities, Towns and Villages", "Wards", "Ooaza, or a large hamlet," (a large collection of dwellings), "Koaza/Cho-me, or a small hamlet" (a small collection of dwellings), "Banchi, or House number." When any one of the fields is clicked, the input page goes to an item input page as shown in FIG. 2 (b). The right side of the item input page is allocated for a description (i.e. name) of an administrative district. Here, the administrative district names are preliminarily stored in the information storing unit 3. The number of the administrative district item fields in the item input page ranges from 1 to n. In the present embodiment as shown in FIG.2(c), the number of the fields is, for example, n= 6. When the administrative district item field 1 is clicked, names of "Administrative divisions of Japan" stored preliminarily in the unit 3 are displayed in the form of a list, for instance in the order of the Japanese syllables. In FIG.2 (c), for example, Aichi-prefecture is selected and inputted for the name of "Administrative divisions of Japan" in the field 1. When the administrative district item field 2 is clicked, names of "Cities, Towns, and Villages" are displayed in the form of a list in the order of the Japanese syllables or in other suitable language letters. Then, the user is prompted to select his/her desired name of "Cities, Towns, and Villages" from that list. Here, "Nagoya-city" is selected for the field 2.

The foregoing embodiment, modified for use in the United States would have 3 or 4 administrative item fields, i.e., state/city/street address or state/city/zip code (or country)/street address. Further modified embodiments may comprise more or less administrative fields depending on the address notation of a specific country. An embodiment for Germany may comprise for instance 5 administrative fields, i.e., street/zip code/city/state/country.

As aforesaid, a click on the administrative district item field produces a list of administrative district names that are stored preliminarily in the information storing unit 3. This list gives the user an opportunity to voluntary select and input his/her desired administrative district. According to the present embodiment, every inputted address of the retrieved point is accumulatively stored in the unit 3. Referring to such stored addresses of the retrieved points, as shown in FIG.2 (a), the input page in its initial state is capable of displaying the administrative district name that was inputted last time or the administrative district name having the largest number of input times among other administrative district names of the past-retrieved points.

It is possible to input the address based on said input page in its initial state, with each administrative district name shown in the input page not changed. Alternatively, based on said input page in its initial state, it is possible to input the address by changing the administrative district name shown therein; for example, the address input is done by changing only names of "A large hamlet, or Ooaza" (a large collection of dwellings), "A small hamlet, or Koaza/Cho-me" (a small collection of dwellings), and "House number, or Banchi," while having left names of "Administrative divisions of Japan" (the Tokyo metropolitan area, Hokkaido, and other prefectures), "Cities, Towns and Villages", and "Wards" as they are in their initial state.

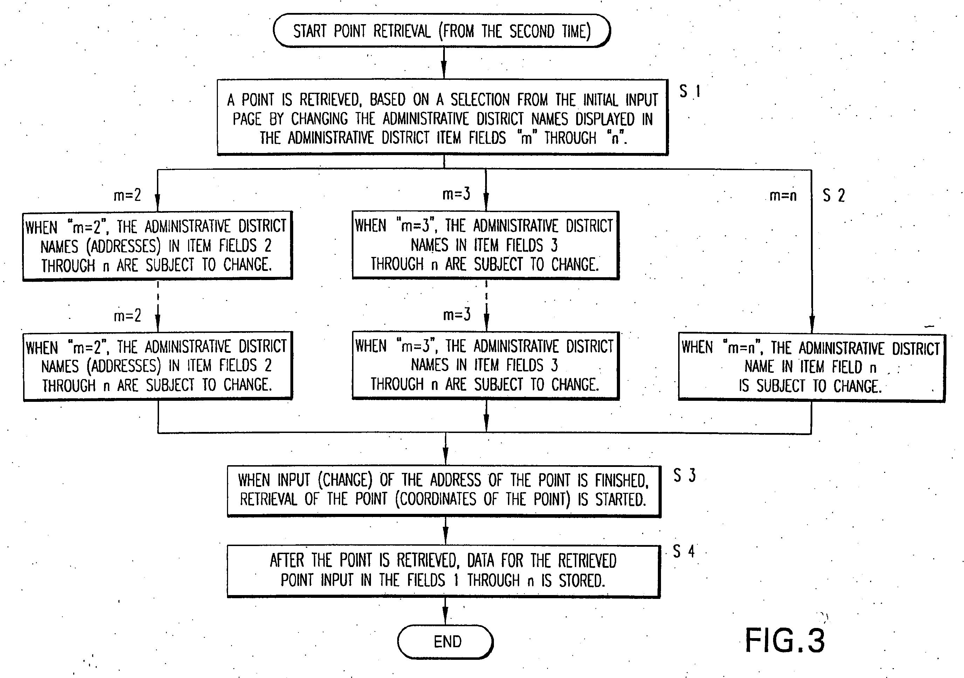

FIG.3 is a flowchart showing a process of point retrieval based on addresses according to the present embodiment. As aforesaid with reference to FIG.2, the input page in its initial state shows the administrative district name that was inputted last time or the administrative district name having the largest number of input times among other administrative district names of the past-retrieved points. Therefore, when the user wants to retrieve a new point whose address is similar to the address of the past-retrieved point, the retrieval of the new point is done, based on the input page in its initial state, by changing the administrative district names shown in the administrative district item fields "m" through "n" (Step 1). In detail, when "m"=2, the administrative district item fields 2 through n are subjected to change of the administrative district name. When "m"=3, the administrative district item fields 3 through n are subjected to change of the administrative district name. When "m"=n, only the administrative district item field n is subjected to change of the administrative district name (Step 2). When the administrative district item field is clicked, the administrative district names are displayed in the form of a list in the order of the Japanese syllables on the right side of the item input page. Then, the user is prompted to select his/her desired administrative district name from the list, and thereby the address of the new point is inputted.

When input of the address of the point is finished, retrieval of the new point (coordinates of the new point) is started (Step3). After the new point is retrieve d, data about the retrieved new point, i.e., each piece of data about each administrative district name of the retrieved new point in the fields 1 through n, is stored into the unit 3 (Step4). In other words, data about the address of the retrieved new point is stored into the unit 3 on a field-to-field basis (i.e., on an administrative district-to-district basis). This helps the user to input his/her desired address on an administrative district-to-district basis, which simplifying a process for inputting the address of a point.

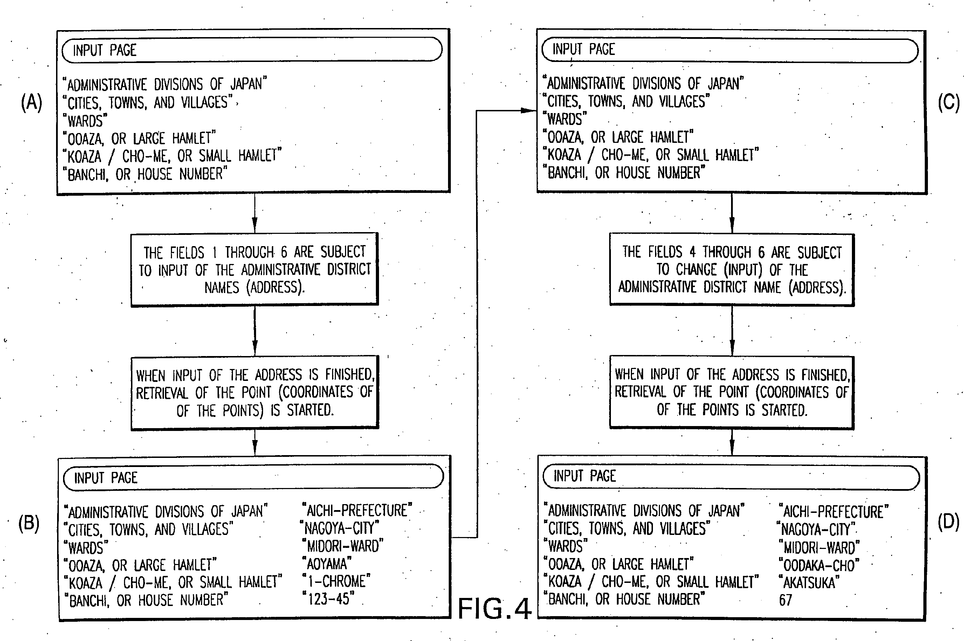

FIG.4 illustrates a process for inputting an address of a point to be retrieved according to the preferred embodiment.

FIG. 4(a) shows an initial state of the input page. In its initial state, the left side of the input page displays administrative district items while the right side of the input page is blank. Here, the description takes a case where the number of the administrative district item fields is six (n=6) and the fields 1 through 6 are subjected to input of the administrative district names. As aforesaid, the input of the administrative district name in each field is done with a click. When the field is clicked, the input page goes to the item input page. In this item input page, the administrative district names are displayed in the form of a list on the right side. Then, the user is prompted to select his/her desired name of the administrative district from the list. A series of said processes is repeated to the number of the administrative district item fields, and thereby the address of a point is inputted as a whole. When the input of the address is finished, retrieval of the point (coordinates of the point) is started. After the point is retrieved, data about the address of the retrieved point, i.e., each piece of data about each administrative district name of the retrieved point is stored into the unit 3 on a field-to-field basis (i.e., on an administrative district-to-district basis).

From the next time of the address input, the input page in its initial state displays, as shown in FIG.4(b), the address that was inputted last time around. The address input page in its initial state helps to simplify a process for inputting a new address. For example, if the new address slightly differs from a past-inputted address in administrative district items of "Ooaza, or a large hamlet," (a large collection of dwellings), "Koaza/Cho-me, or a small hamlet" (a small collection of dwellings), and "Banchi, or House number," the user is allowed to input the new address based on the input page in its initial state, by changing the names of only "Koaza/Cho-me, or a small hamlet" (a small collection of dwellings), and "Banchi, or House number," as shown in FIG.4(d) while having left the names of "Administrative divisions of Japan" (the Tokyo metropolitan area, Hokkaido, and other prefectures), "Cities, Towns and Villages", and "Wards" just as they are in their initial state as shown in FIG. 4(c). When input of the address is finished, retrieval of a point (coordinates of the point) is started. After the point is retrieved, data about the address of the retrieved point, i.e., each piece of data about each administrative district name of the retrieved point is stored in the unit 3 on a field-to-field basis (i.e., on an administrative district-to-district basis).

In summarize, the map display device according to the present invention makes full use of the address that was inputted last time around, which simplifying a process for inputting an address of a new point located near the past -retrieved point whose address was inputted last time, and thereby facilitating easy point retrieval.

According to the present invention, data about every address of every past-retrieved point is stored on a field-to-field basis (i.e., administrative district-to-district basis). This contributes to a simplification of the point retrieval; in other words, a simplification of the process for inputting the administrative district name as well as for selecting the administrative district name from the list. Hereinafter, the description takes exemplary cases of the simplified process for inputting the administrative district name and for selecting the administrative district name from the list.

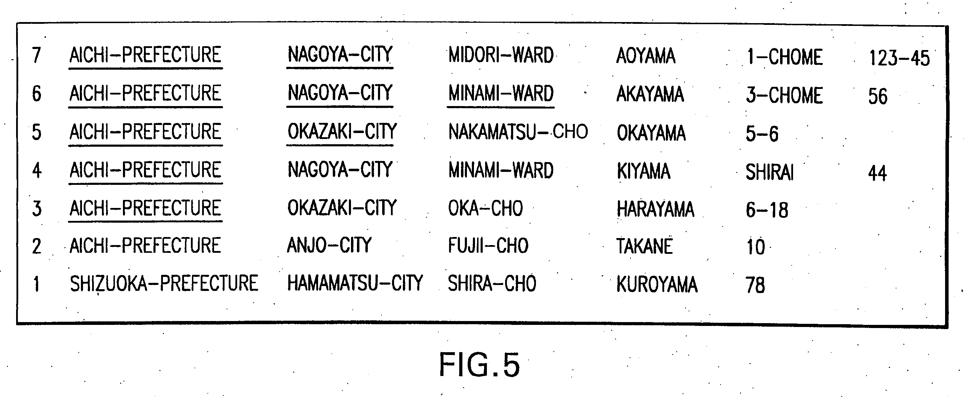

FIG. 5 shows historic records of the inputted addresses of points that were retrieved seven times in the past.

As shown in FIG.5, in the first time of the point retrieval, "Shizuoka-prefecture, Hamamatsu-city, Shira-cho, Kuroyama 78" was inputted. In the second time of the point retrieval, "Aichi-prefecture, Anjo-city, Fujii-cho, Takane 10" was inputted. In the third and fourth time of the point retrieval, "Aichi-prefecture" was available from the address inputted in the second time around. In the fifth time of the point retrieval, both "Aichi-prefecture" and "Okazaki-city" were available from the address inputted in the third time around. In the sixth time of the point retrieval, "Aichi-prefecture," "Nagoya-city," and "Minami-ward" were available from the address inputted in the fourth time around. In the seventh time of the point retrieval, "Aichi-prefecture" and "Nagoya-city" were available from the address inputted in the sixth time around.

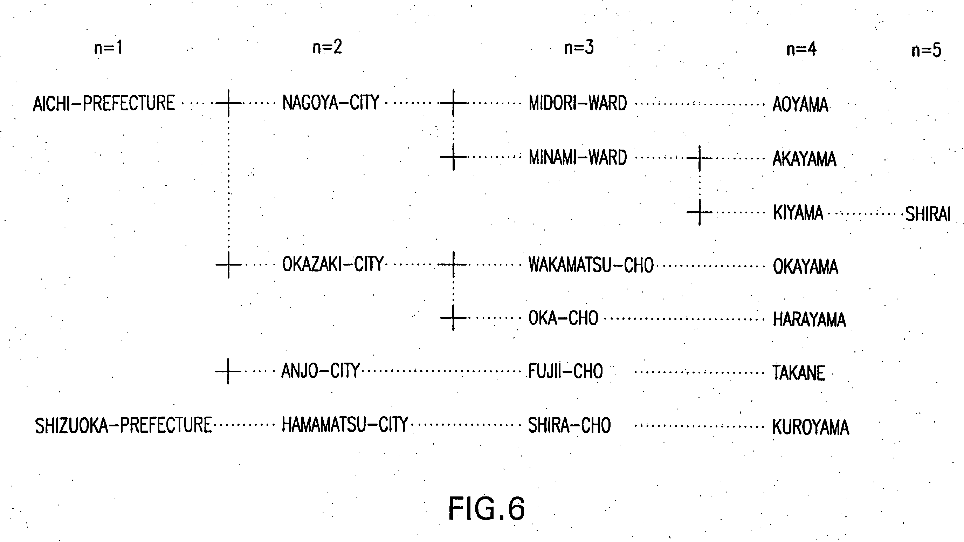

FIG. 6 illustrates data structure of the historic records of the inputted addresses of the past-retrieved points shown in FIG. 5.

The data structure of the historic records takes the form of a treelike chart in which data about upper administrative district item field is linked to data about lower administrative district item field. For example, "Aichi-prefecture" in the administrative district item field 1 links up with "Nagoya-city," "Okazaki-city," and "Anjo-city" in the administrative district item field 2. "Nagoya-city" in the field 2 links up with "Midori-ward" and "Minami-ward" in the administrative district item field 3. "Okazaki-city" in the field 2 links up with "Wakamatsu-cho" and "Oka-cho" in the field 3. "Anjo-city" in the field 2 links up with "Fujii-cho" in the item field 3. In the same manner as above, every data in the field 3 links up with data in the administrative district item field 4. The data in the field 4 links up with data in the administrative district field 5.

Said data structure can eliminate duplication of storing the same administrative district names, and thereby saving memory space in the map display device. This enables a limited memory space to store voluminous historic records of the inputted addresses of the past-retrieved points.

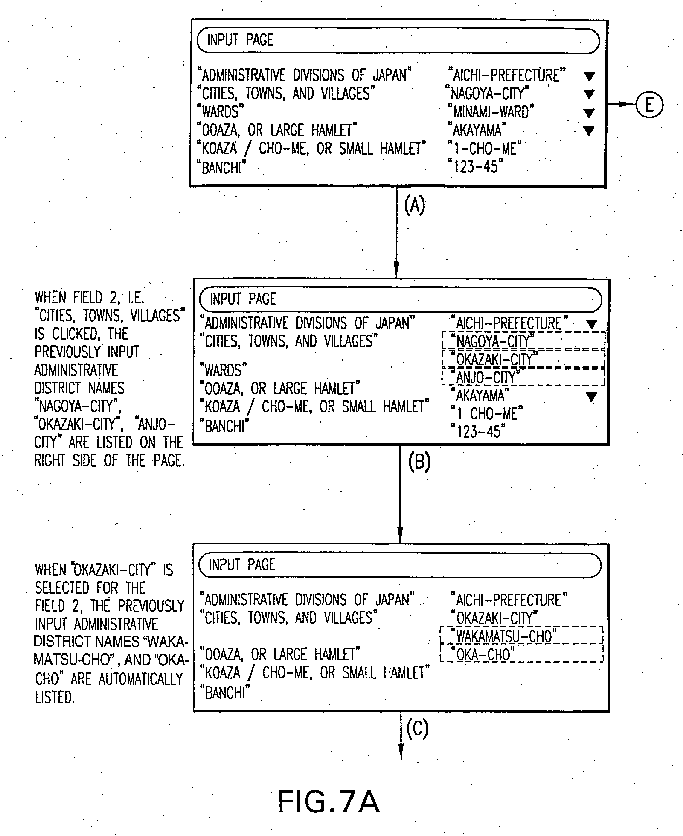

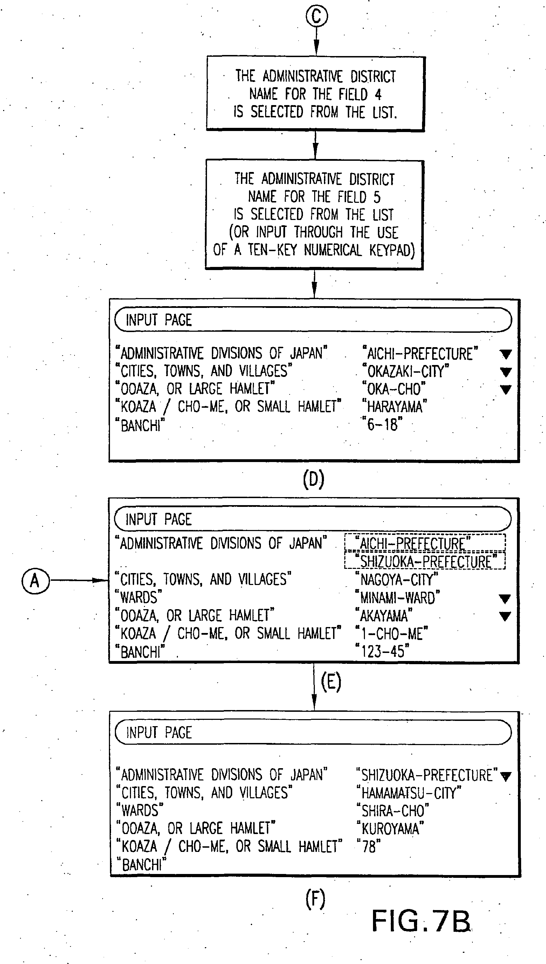

FIG.7 illustrates a process for inputting an address of a point to be retrieved based on data structure shown in FIG. 6.

FIG.7(a) shows an initial state of the input page on which the historic records of the inputted address of the past -retrieved point is displayed. In this input page, a mark ▼ at the right end of the administrative district item field indicates that the field has a plurality of the administrative district names inputted in the past. In other words, the mark ▼ tells that the historic records of the inputted address of the past -retrieved points allow the user to select his/her desired administrative district name therefrom. In FIG.7 (a), "Aichi-prefecture" is selected for the field 1 of "Administrative divisions of Japan". When the field 2 of "Cities, Towns and Villages" is clicked, the past-inputted administrative district names, "Nagoya-city," "Okazaki-city," and "Anjo-city" are listed on the right side of the item input page as shown in FIG.7 (b). When "Okazaki-city" is selected for the field 2, the past-inputted administrative district names for the field 3, "Wakamatsu-cho" and "Oka-cho," are automatically listed as shown in FIG.7(c). When "Oka-cho" is selected for the field 3, in the same manner as above, the past-inputted administrative district names for the field 4 and the field 5 are sequentially displayed in the form of a list and the user is prompted to select his/her desired administrative district name from that list. Thus, the address is inputted as a whole as shown in FIG.7(d).

In other circumstances, for example, when the field 1 of "Administrative divisions of Japan" is clicked, the past-inputted administrative district names, "Aichi-prefecture" and "Shizuoka-prefecture," are automatically listed on the right side of the item input page as shown in FIG.7(e). When "Shizuoka-prefecture" is selected for the field 1, each of the lower administrative district names, "Hamamatsu-city," "Shira-cho," "Kuroyama," and "78," are automatically and sequentially selected for each lower administrative district item field. Thus, the address is inputted as a whole as shown in FIG.7 (f). Said automatic selection of the administrative district names is based on the historic records of the inputted addresses of the past-retrieved points.

According to the invention, selection of the upper administrative district name causes automatic sequential input of the lower administrative district names based on the historic records of the inputted address of the past -retrieved points. If there is a plurality of administrative district names for one field, they are displayed in the form of a list so that the user can select his/her desired administrative district name from that list. If there is only one administrative district name for one field, it is automatically selected as the user-desired administrative district name and displayed in the field. Such automatic selection of the administrative district name can simplify the process for inputting the address.

In other cases, the selection of the upper administrative district name is carried out under circumstances where there is a plurality of administrative district names for one lower administrative district item field below the selected upper administrat ive district item field. In this case, the latest record of the inputted address of the past -retrieved point, i.e., the administrative district name that was inputted last time around, is automatically selected for the lower administrative district item field. If such lower administrative district name according,to the latest record is unwanted by the user, the other administrative district names for the lower administrative district item field are displayed one by one in the order in which they were inputted for the point retrieval.

There is a case where address data or the like is exchanged between two computers that differ with each other, for instance, between a map display device and a personal computer. In this case, the difference between the map display device and the personal computer sometimes causes lack of data-portability between them. For example, assume that data stored in the personal computer is exported to the map display device. In this case, portability of the address data concerning the administrative district names is sometimes lost while the portability of coordinates data about the administrative districts is maintained.

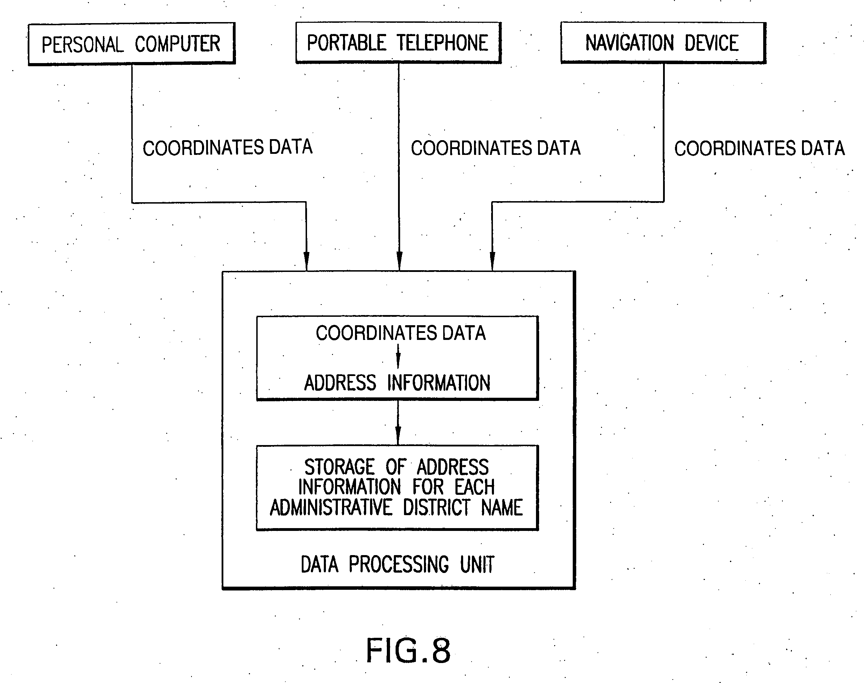

In order to ensure full data-portability between different systems, as shown in FIG. 8, the data processing unit in the map display device according to the present invention is designed to derive address information from the coordinates data exported from other systems, for example, a personal computer, a portable telephone, a navigation device, etc. The derived address information serving as the address data concerning administrative district name is stored into the unit 3 and used in inputting the administrative district name into each administrative district item field.

In such a way, the address data, i.e., the address information derived from the coordinates data, stored in other systems may be used in the map display device. This enhances the usefulness of the simplified process for inputting the address of a point to be retrieved.

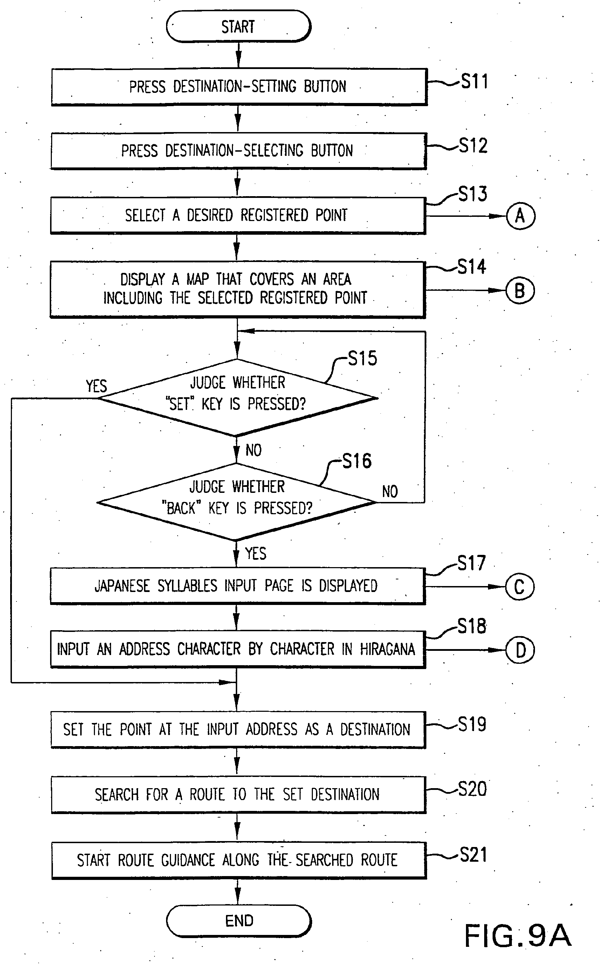

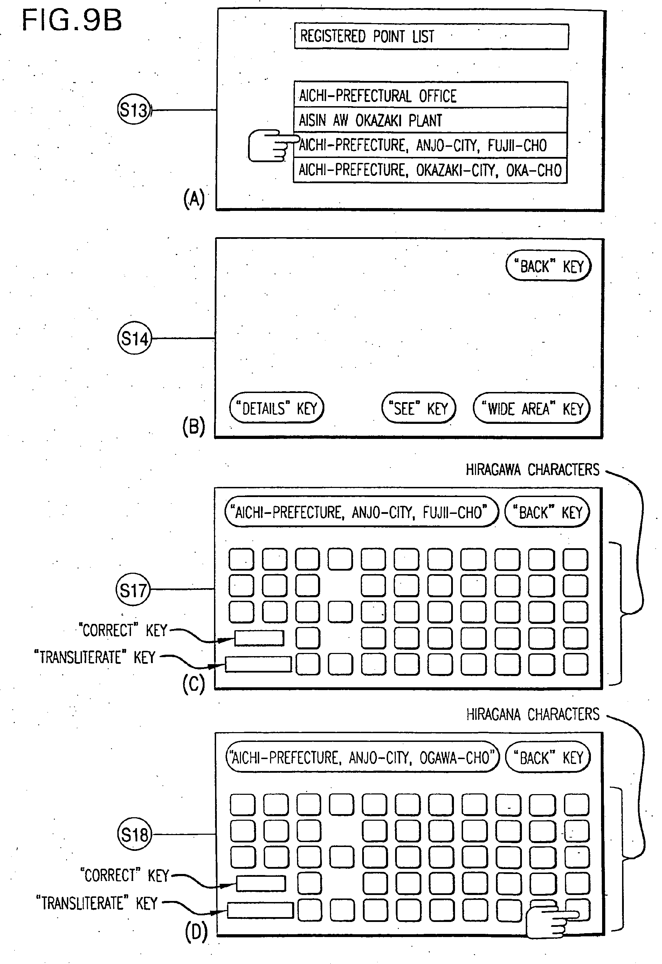

FIG.9 illustrates other exemplary process of point retrieval based on addresses according to the preferred embodiment.

The other process of the point retrieval requires the following steps.

To begin with the process, press a destination-setting button provided on a menu page displayed on the map display device (Step S11). When the menu page goes to a next page, press a destination-selecting button provided on that next page (Step S12). Upon pressing the destination-selecting button, a registered point list showing historic records of inputted addresses of the past-retrieved points is displayed as shown in FIG.9 (a). Then, select a desired registered point from the list (Step S13). Upon selection of the desired registered point from the list, a map that covers an area including the selected registered point is displayed as shown in FIG.9 (b) (Step S14). Said map is provided with the following on-screen keys; "Details" key with which a detailed map is displayed, "Wide area" key with which a wide-area map is displayed, "Back" key with which the page returns to a previous page, and "Set" key with which a destination is set.

After Step S14, judge whether "Set" key is pressed (Step S15). When it is judged that "Set" key is pressed, the process goes to Step S19 and the desired registered point (selected in Step S13) is set as a destination. When it is judged that "Set" key is not pressed, judge whether "Back" key is pressed (Step S16). If it is judged that "Back" key is pressed, the page goes to the input page, e.g. to a Japanese syllables input page, as shown in FIG.9(c) (Step S17). For example, when "Aichi-prefecture, Anjo-city, Fujii-cho" is selected from the registered point list shown in FIG.9 (a) in Step S13, "Aichi-prefecture, Anjo-city, Fujii-cho" is automatically displayed in the input page as shown in FIG.9(c). If the user wants to retrieve other address by changing "Fujii-cho" to "Ogawa-cho" for example, "Correct" key provided on the input page is operated to delete "Fujii-cho" on a character-by-character basis. When "Fujii-cho" is completely deleted, input "Ogawa-cho" in hiragana characters (46 Japanese symbols to represent all sound combinations) from the input page, e.g. from a Japanese syllables input page. Then, press a "Transliterate" key provided on the
input page so that "Ogawa-cho" in hiragana character may be transliterated into
kanji character (Chinese character). In an embodiment modified for Europe, the "Transliterate" key may provide a transliteration of the Latin characters into special characters of the specified language. After pressing "Transliterate" key, the page goes to
another page as shown in FIG.9(d) (Step S18) and then "Aichi-prefecture, Anjo-city, Ogawa-cho" is set as a destination (Step S19). Upon set of the destination, a route to the destination is searched (Step S20). Then, route guidance along the searched route is started (Step S21).

As understood from said description of the other exemplary process, the map display according to the present invention makes full use of historic records of the inputted addresses of the past-retrieved points, which simplifying a process for input ting the address of a point located near the past-retrieved point, and thereby facilitating easy point retrieval.

The map display device according to the present invention may be an in-car map display device comprising present position detection means, input means, and communication means, wherewith the following processes are carried out. When present position data, guide data, etc. are transmitted from the in -car map display device to a information center, the center searches for a route and sends back the searched route together with guide information thereof etc. to the in -car map display device. Upon receipt of the searched route, the guide information thereof, etc., the map display device outputs them to the user.

In the in-car map display device, the information center comprising retrieval means, route search means, etc. contains cartographic data, address data, point data, and data about historic records of inputted address of the past -retrieved points stored in the form of the treelike chart as shown in FIG.6. Receiving said data related to point retrieval from the in-car map display device, the information center sends back to the in-car map display device as shown in FIG.7 pieces of information about an input page from which an address is inputted on an administrative-district-to-district basis. Upon receipt of the information about the administrative districts from the information center, the in -car map display device calls up the input page. Upon clicking the left or right side of the administrative district item field provided on the input page, the information center starts to retrieve the address data and the data about historic records of the inputted address of the past -retrieved point Then, the center sends back the retrieved data to the in-car map display device.

Thus, a point retrieval request from the in-car map display device causes the information center to retrieve data necessary for the address input in the in-car map display device, which simplifying the process for inputting the address and thereby enhancing the usefulness of the simplified address input for easy point retrieval.

## Claims

1. A map display device adapted for retrieving a point at an inputted address and for displaying a map that covers a retrieved point at the inputted address, comprising:
input means;
a storage means (3) adapted for storing historic records of the inputted addresses of past-retrieved points on an administrative district-to-district basis, the administrative districts corresponding to the administrative divisions of a country standard hierarchical address notation;
an output unit (6); and
a control means (11) adapted for displaying an input page with a plurality of administrative district item fields set for the plurality of administrative districts and respective administrative district names corresponding to the inputted address of a past-retrieved point, which is stored in the storage means (3), in association with the plurality of administrative district item fields, in which,
when an upper hierarchical administrative district item field is selected from the displayed administrative district item fields, past-inputted administrative district names for said upper hierarchical administrative district item field are displayed in the form of a list and the user is prompted to select an administrative district name for the selected upper hierarchical administrative district item field from that list, and
when the administrative district name for the upper hierarchical administrative district item field is selected, past-inputted administrative district names for a lower hierarchical administrative district field are displayed in the form of a list and the user is prompted to select an administrative district name from that list.

2. The map display device according to claim 1, wherein the administrative district name of the past-retrieved point is one of being inputted last time.

3. The map display device according to claim 1, wherein the administrative district name of the past-retrieved point is one of having the largest number of input times among other administrative district names of the past-retrieved points.

4. The map display device according to claim 1, 2 or 3, wherein the address of the past-retrieved point stored on an administrative district-to-district basis represents an address of a point set as a destination.

5. A program for a map display device for retrieving a point at an inputted address and for displaying a map that covers a retrieved point at the inputted address, wherethrough:
historic records of the inputted addresses of past-retrieved points are stored on an administrative district-to-district basis, the administrative districts corresponding to the administrative divisions of a country standard hierarchical address notation; and
an input page from which an address is inputted is displayed with a plurality of administrative district item fields set for the plurality of administrative districts and respective administrative district names corresponding to the inputted address of a past-retrieved point, in which,
when an upper hierarchical administrative district item field is selected from the displayed administrative district item fields, past-inputted administrative district names for said upper hierarchical administrative district item field are displayed in the form of a list and the user is prompted to select an administrative district name for the upper hierarchical administrative district item field from that list, and
when the administrative district name for the upper hierarchical administrative district item field is selected, past-inputted administrative district names for a lower hierarchical administrative district field are displayed in the form of a list and the user is prompted to select an administrative district name from that list.

## Patentansprüche

1. Kartenanzeigevorrichtung, die zum Auffinden eines Punkts an einer eingegebenen Adresse und zum Anzeigen einer Karte, die einen aufgefundenen Punkt an der eingegebenen Adresse umfasst, ausgebildet ist, wobei die Vorrichtung Folgendes aufweist:
Eingabeeinrichtungen,
eine Speichereinrichtung (3), die zum Speichern von historischen Datensätzen von eingegebenen Adressen von früher aufgefundenen Punkten auf Verwaltungsbezirksbasis ausgebildet ist, wobei die Verwaltungsbezirke den Verwaltungseinheiten in einer hierarchischen Standardadressschreibweise eines Landes entsprechen;
eine Ausgabeeinheit (6); und
eine Steuereinrichtung (11), die zum Anzeigen einer Eingabeseite mit mehreren Verwaltungsbezirksdatenfeldern ausgebildet ist, die für die mehreren Verwaltungsbezirke und jeweiligen Verwaltungsbezirksnamen eingerichtet ist, die der eingegebenen Adresse eines in Verbindung mit den mehreren Verwaltungsbezirksdatenfeldern in der Speichereinrichtung (3) gespeicherten, früher aufgefundenen Punkts entsprechen, wobei
bei Auswahl eines Verwaltungsbezirksdatenfelds einer oberen Hierarchieebene aus den angezeigten Verwaltungsbezirksdatenfeldern zuvor eingegebene Verwaltungsbezirksnamen für das Verwaltungsbezirksdatenfeld der oberen Hierarchieebene in Listenform angezeigt werden und der Benutzer aufgefordert wird, einen Verwaltungsbezirksnamen für das gewählte Verwaltungsbezirksdatenfeld der oberen Hierarchieebene aus dieser Liste auszuwählen, und
nach Auswahl des Verwaltungsbezirksnamens für das Verwaltungsbezirksdatenfeld der oberen Hierarchieebene früher eingegebene Verwaltungsbezirksnamen für ein Verwaltungsbezirksfeld einer unteren Hierarchieebene in Listenform angezeigt werden und der Benutzer aufgefordert wird, einen Verwaltungsbezirksnamen aus dieser Liste auszuwählen.

2. Kartenanzeigevorrichtung nach Anspruch 1, wobei der Verwaltungsbezirksname des früher aufgefundenen Punkts einer ist, der das letzte Mal eingegeben wurde.

3. Kartenanzeigevorrichtung nach Anspruch 1, wobei der Verwaltungsbezirksname des früher aufgefundenen Punkts unter anderen Verwaltungsbezirksnamen von früher aufgefundenen Punkten einer ist, der die meisten Male eingegeben wurde.

4. Kartenanzeigevorrichtung nach Anspruch 1, 2 oder 3, wobei die Adresse des früher aufgefundenen Punkts, der auf Verwaltungsbezirksbasis gespeichert wurde, eine Adresse eines als Zielort eingestellten Punkts ist.

5. Programm für eine Kartenanzeigevorrichtung zum Auffinden eines Punkts an einer eingegebenen Adresse und zum Anzeigen einer Karte, die einen aufgefundenen Punkt an der eingegebenen Adresse umfasst, durch das Folgendes erfolgt:
historische Datensätze von eingegebenen Adressen von früher aufgefundenen Punkten werden auf Verwaltungsbezirksbasis gespeichert, wobei die Verwaltungsbezirke den Verwaltungseinheiten in einer hierarchischen Standardadressschreibweise eines Landes entsprechen; und
eine Eingabeseite, von der aus eine Adresse eingegeben wird, wird mit mehreren Verwaltungsbezirksdatenfeldern angezeigt, die für die mehreren Verwaltungsbezirke und jeweiligen Verwaltungsbezirksnamen eingerichtet sind, die der eingegebenen Adresse eines früher aufgefundenen Punkts entsprechen, wobei
bei Auswahl eines Verwaltungsbezirksdatenfelds einer oberen Hierarchieebene aus den angezeigten Verwaltungsbezirksdatenfeldern früher eingegebene Verwaltungsbezirksnamen für das Verwaltungsbezirksdatenfeld der oberen Hierarchieebene in Listenform angezeigt werden und der Benutzer aufgefordert wird, einen Verwaltungsbezirksnamen für das Verwaltungsbezirksdatenfeld der oberen Hierarchieebene aus dieser Liste auszuwählen, und
nach Auswahl des Verwaltungsbezirksnamens für das Verwaltungsbezirksdatenfeld der oberen Hierarchieebene früher eingegebene Verwaltungsbezirksnamen für ein Verwaltungsbezirksdatenfeld einer unteren Hierarchieebene in Listenform angezeigt werden und der Benutzer aufgefordert wird, einen Verwaltungsbezirksnamen aus dieser Liste auszuwählen.

## Revendications

1. Dispositif d'affichage de carte apte à récupérer un point au niveau d'une adresse saisie et à afficher une carte qui couvre un point récupéré au niveau de l'adresse saisie, comprenant :
un moyen d'entrée ;
un moyen de stockage (3) apte à stocker des enregistrements historiques des adresses saisies de points récupérés antérieurs sur une base « secteur administratif par secteur administratif », les secteurs administratifs correspondant aux divisions administratives d'une notation d'adresse hiérarchique standard de pays ;
une unité de sortie (6) ; et
un moyen de commande (11) apte à afficher une page de saisie avec une pluralité de champs d'éléments de secteurs administratifs définis pour la pluralité de secteurs administratifs et des noms de secteurs administratifs respectifs correspondant à l'adresse saisie d'un point récupéré antérieur, laquelle est stockée dans le moyen de stockage (3), en association avec la pluralité de champs d'éléments de secteurs administratifs, dans lequel,
lorsqu'un champ d'élément de secteur administratif hiérarchique supérieur est sélectionné parmi les champs d'éléments de secteurs administratifs affichés, des noms de secteurs administratifs saisis antérieurs pour ledit champ d'élément de secteur administratif hiérarchique supérieur sont affichés sous la forme d'une liste et l'utilisateur est invité à sélectionner un nom de secteur administratif pour le champ d'élément de secteur administratif hiérarchique supérieur sélectionné à partir de cette liste ; et
lorsque le nom de secteur administratif pour le champ d'élément de secteur administratif hiérarchique supérieur est sélectionné, des noms de secteurs administratifs saisis antérieurs pour un champ de secteur administratif hiérarchique inférieur sont affichés sous la forme d'une liste et l'utilisateur est invité à sélectionner un nom de secteur administratif à partir de cette liste.

2. Dispositif d'affichage de carte selon la revendication 1, dans lequel le nom de secteur administratif du point récupéré antérieur est celui qui a été saisi le plus récemment.

3. Dispositif d'affichage de carte selon la revendication 1, dans lequel le nom de secteur administratif du point récupéré antérieur est celui présentant le plus grand nombre d'occurrences de saisie parmi d'autres noms de secteurs administratifs des points récupérés antérieurs.

4. Dispositif d'affichage de carte selon la revendication 1, 2 ou 3, dans lequel l'adresse du point récupéré antérieur stockée sur une base « secteur administratif par secteur administratif » représente une adresse d'un point défini en tant qu'une destination.

5. Programme pour un dispositif d'affichage de carte, destiné à récupérer un point au niveau d'une adresse saisie et à afficher une carte qui couvre un point récupéré au niveau de l'adresse saisie, par le biais duquel :
des enregistrements historiques des adresses saisies de points récupérés antérieurs sont stockés sur une base « secteur administratif par secteur administratif », les secteurs administratifs correspondant aux divisions administratives d'une notation d'adresse hiérarchique standard de pays ; et
une page de saisie à partir de laquelle une adresse est saisie est affichée avec une pluralité de champs d'éléments de secteurs administratifs définis pour la pluralité de secteurs administratifs et des noms de secteurs administratifs respectifs correspondant à l'adresse saisie d'un point récupéré antérieur, dans lequel,
lorsqu'un champ d'élément de secteur administratif hiérarchique supérieur est sélectionné parmi les champs d'éléments de secteurs administratifs affichés, des noms de secteurs administratifs saisis antérieurs pour ledit champ d'élément de secteur administratif hiérarchique supérieur sont affichés sous la forme d'une liste et l'utilisateur est invité à sélectionner un nom de secteur administratif pour le champ d'élément de secteur administratif hiérarchique supérieur à partir de cette liste ; et
lorsque le nom de secteur administratif pour le champ d'élément de secteur administratif hiérarchique supérieur est sélectionné, des noms de secteurs administratifs saisis antérieurs pour un champ de secteur administratif hiérarchique inférieur sont affichés sous la forme d'une liste et l'utilisateur est invité à sélectionner un nom de secteur administratif à partir de cette liste.
